# EUROPEAN PATENT APPLICATION

(11) **EP 4 672 646 A1**
(43) Date of publication of application: **31.12.2025**
(21) Application number: 24185315.9
(22) Date of filing: 28.06.2024
(51) Int. Cl.: H04J 14/02

(54) **REDUCTION OF POWER CONSUMPTION IN AN OPTICAL NETWORK**

(71) Applicant: Nokia Networks France, 91300 Massy (FR)
(72) Inventor: BISSON, Arnaud, 75014 Paris (FR); ANDELIC, Milosav, New Providence, 79074 (US); VERCHERE, Dominique, 91650 Breuillet (FR); ERREA MORENO, Javier, 92160 Antony (FR); ABNAOU, Lahcen, 11000 Rabat (MA)
(74) Representative: Novagraaf Technologies

(57) **Abstract**

A method comprises: obtaining, for a set of trails established through one or more optical links between two same nodes of an optical network, a total load indicator corresponding to traffic currently transmitted via all the active trails in the set of trails; making a first determination based on the total load indicator is below a first threshold; based on the first determination, triggering a deactivation of an optical source of at least one first trail selected among the active trails in the set of trails.

## Description

### TECHNICAL FIELD

Various example embodiments relate generally to a method and corresponding apparatus for managing activation and/or deactivation of trails.

### BACKGROUND

In optical networks (e.g., WDM networks), most of the power consumption is due to the line cards used at the source and destination of the trails. As an example measured for a typical deployed network, about 60-70% of the power consumption is due to the line cards including the optical sources generating the optical signal to be transmitted via the trails.

There is a need for reducing power consumption in an optical network.

### SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a method comprises: obtaining, for a set of trails established through one or more optical links between two same nodes of an optical network, a total load indicator corresponding to traffic currently transmitted via all the active trails in the set of trails; making a first determination based on the total load indicator is below a first threshold; based on the first determination, triggering a deactivation of an optical source of at least one first trail selected among the active trails in the set of trails.

The method may comprise: making a second determination on the basis of the total load indicator and a second threshold; and, based on the second determination, triggering an activation of an optical source of at least one second trail selected among deactivated trails in the set of trails.

The second determination may be that a total remaining capacity for traffic transmission over all the trails of the set of trails is below a second threshold.

The method may comprise: checking whether the total load indicator is below the first threshold at a first temporal frequency ; and checking whether the total remaining capacity is below a second threshold at a second temporal frequency higher than the first temporal frequency.

The second determination may be that the total load indicator is above a second threshold.

The method may comprise: checking whether the total load indicator is below the first threshold at a first temporal frequency; checking whether the total load indicator is above the second threshold at a second temporal frequency higher than the first temporal frequency.

The method may comprise: obtaining first trail specific information for one or more of the activated trails; selecting the at least one first trail among the activated trails by applying a deactivation prioritization rule based on the first trail specific information, wherein the first trail specific information for a given trail includes at least one of: a performance indicator of the considered trail, a power consumption of a piece of equipment operating the trail, or a current traffic rate via the considered trail.

The method may comprise: obtaining second trail specific information for one or more of the deactivated trails; selecting the at least one second trail among the deactivated trails by applying an activation prioritization rule based on the second trail specific information, wherein the second trail specific information for a given trail includes at least one of: a maximum traffic rate available for the considered trail, or a power consumption of a piece of equipment operating the trail.

According to a second aspect, an apparatus comprises processing circuitry for: obtaining, for a set of trails established through one or more optical links between two same nodes of an optical network, a total load indicator corresponding to traffic currently transmitted via active trails in the set of trails; making a first determination that the total load indicator is below a first threshold; and, based on the first determination, triggering a deactivation of an optical source of at least one first trail selected among the active trails in the set of trails.

The processing circuitry may be adapted for, based on a second determination on the basis of the total load indicator and a second threshold, triggering an activation of an optical source of at least one second trail selected among deactivated trails in the set of trails.

The second determination may be that a total remaining capacity for traffic transmission over all the trails of the set of trails is below a second threshold,

The processing circuitry may be adapted for checking whether the total load indicator is below the first threshold at a first temporal frequency; and checking whether the total remaining capacity is below a second threshold at a second temporal frequency higher than the first temporal frequency.

The second determination may be that the total load indicator is above a second threshold.

The processing circuitry may be adapted for: checking whether the total load indicator is below the first threshold at a first temporal frequency; checking whether the total load indicator is above the second threshold at a second temporal frequency higher than the first frequency time.

The processing circuitry may be adapted for: obtaining first trail specific information for one or more of the activated trails; selecting the at least one first trail among the activated trails by applying a deactivation prioritization rule based on the first trail specific information, wherein the first trail specific information for a given trail includes at least one of: a performance indicator of the considered trail, a power consumption of a piece of equipment operating the trail at an end node of the trail, or a current traffic rate via the considered trail.

The processing circuitry may be adapted for: obtaining second trail specific information for one or more of the deactivated trails; selecting the at least one second trail among the deactivated trails by applying an activation prioritization rule based on the second trail specific information, wherein the second trail specific information for a given trail includes at least one of: a maximum traffic rate available for the considered trail, or a power consumption a piece of equipment operating the trail at an end node of the trail.

Generally, the apparatus may comprise means for performing one or more or all steps of a method according to the first aspect and/or a method disclosed herein. The means may include at least one processor and at least one memory storing instructions that, when executed by the at least one processor, cause the apparatus to perform one or more or all steps of a method according to the first aspect. The means may include circuitry (e.g., processing circuitry) to perform one or more or all steps of a method according to the first aspect and/or a method disclosed herein.

According to another aspect, an apparatus comprises at least one processor and at least one memory storing instructions that, when executed by the at least one processor, cause the apparatus to perform at least: obtaining, for a set of trails established through one or more optical links between two same nodes of an optical network, a total load indicator corresponding to traffic currently transmitted via all the active trails in the set of trails; making a first determination based on the total load indicator is below a first threshold; based on the first determination, triggering a deactivation of an optical source of at least one first trail selected among the active trails in the set of trails. The instructions, when executed by the at least one processor, may cause the apparatus to perform one or more or all steps of a method according to the first aspect and/or a method disclosed herein.

According to another aspect, a computer program comprises instructions that, when executed by an apparatus, cause the apparatus to perform: obtaining, for a set of trails established through one or more optical links between two same nodes of an optical network, a total load indicator corresponding to traffic currently transmitted via all the active trails in the set of trails; making a first determination based on the total load indicator is below a first threshold; based on the first determination, triggering a deactivation of an optical source of at least one first trail selected among the active trails in the set of trails. The instructions may cause the apparatus to perform one or more or all steps of a method according to the first aspect and/or a method disclosed herein.

According to another aspect, a non-transitory computer readable medium comprises computer program instructions stored thereon for causing an apparatus to perform at least the following: obtaining, for a set of trails established through one or more optical links between two same nodes of an optical network, a total load indicator corresponding to traffic currently transmitted via all the active trails in the set of trails; making a first determination based on the total load indicator is below a first threshold; based on the first determination, triggering a deactivation of an optical source of at least one first trail selected among the active trails in the set of trails. The computer program instructions may cause the apparatus to perform one or more or all steps of a method according to the first aspect and/or a method disclosed herein.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 provides a schematic representation of an optical network 100 according to an example.
FIG. 2 shows a flowchart of a method for managing activation and/or deactivation of trails according to examples.
FIG. 3 shows a flowchart of a method for managing activation and/or deactivation of trails according to examples.
FIG. 4 shows is a block diagram illustrating an exemplary hardware structure of an apparatus according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. However, specific structural and/or functional details disclosed herein are merely representative for purposes of describing example embodiments and providing a clear understanding of the underlying principles. However, these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

Trails of an optical network may be active since their initial deployment and may be not switched off if until their load drops down while the traffic allocated to these trails may evolve dynamically in short/medium/long terms.

In embodiments, trail activation and deactivation may be managed bundle per bundle in order to reduce power consumption based on a monitoring of a total load of the bundle, the total load corresponding to traffic currently transmitted via active trails in the bundle.

A bundle may be defined as a set of trails having all a first end at a same first end node (e.g., source node) and a second end at a same second end node (e.g., destination node) in the optical network. Since optical transmissions are usually bi-directional for a trail, the role of the source node and destination node may be exchanged such that the first end node may be the destination node and the second end node may be the source node.

In embodiments, all trails of a bundle of trails follows a same route between a first end node (e.g., source node) and a second end node (e.g., destination node) in the optical network.

In embodiments, the trails may be grouped into bundles by taking into account other additional characteristics like: the latency of the trail, a capacity or type of line card (the capacity of the line card or its type may depend on the bitrate to be carried by the trail and/or the number of trails to be generated by the considered line card), a type of protection available for the trail (e.g., when there is a duplication of equipment to switch to an alternative path in case of failure of a trail), the network operator, etc. For example, only trails having all a same first end node (e.g., source node) and a same second end node (e.g., destination node) and, in addition, a same and/or similar latency may be grouped into a bundle. For example, only trails having all a same first end node (e.g., source node) and a same second end node (e.g., destination node) and, in addition, from a same network operator may be grouped into a bundle.

A trail may correspond to an optical link that may include one or more interconnected optical fibers to provide optical connection between a first end node (e.g., source node) and a second end node (e.g., destination node). A trail may correspond to a wavelength range used for data transmission. A trail may for example correspond to a TE-Link (Traffic Engineering Link).

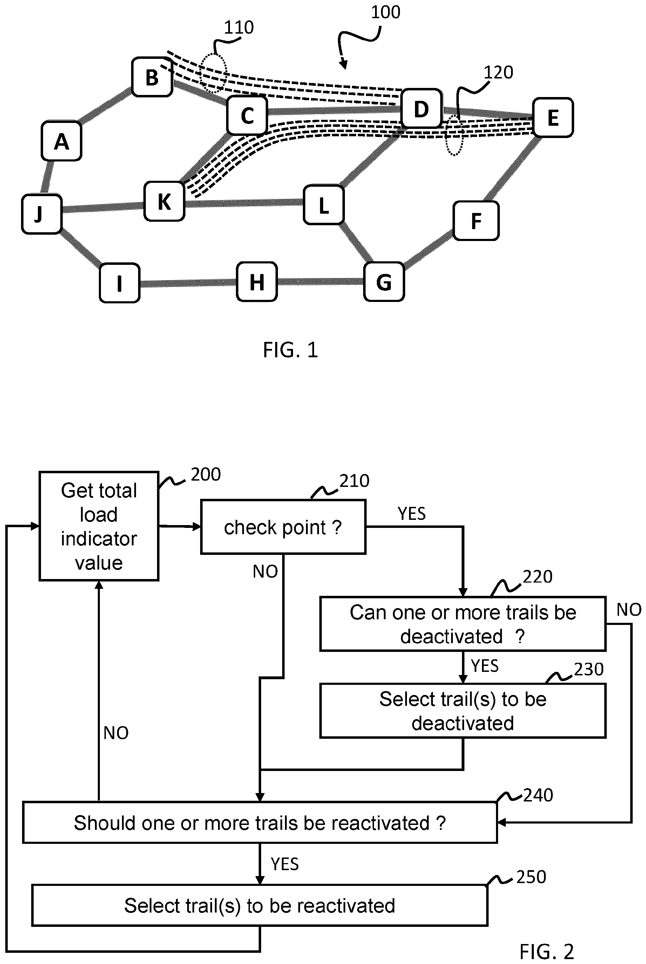

FIG. 1 provides a schematic representation of an optical network 100 according to an example.

The optical network 100 includes nodes A to L. A first bundle 111 consists in 3 trails used to link first end node B to second end node E through a same route including nodes C and D. A second bundle 112 consists in 4 trails used to link first end node K to second end node E through a same route including nodes C and D.

Embodiments for trail activation and/or deactivation will be described in detail. In embodiments, the total load of a bundle, corresponding to traffic transmitted through all trails in the bundle, is monitored to be able decide when to activate and/or deactivate one or more trails in the bundle on the basis of the variation over time of the values of this total load.

Monitoring of total load at bundle level allows to avoid issues when a decision to activate a trail is taken based only on a traffic load determined at trail level for a given trail: for example, when a trail used at 10% may be put in standby even if there is no capacity available in the other similar trails to remap the traffic of the deactivated trail.

Monitoring of total load at bundle level for taking decisions to activate and/or deactivate trail(s) allows also to easily reallocate traffic between a first end node and a second end node in the optical network from a trail to be deactivated to the other trails in the bundle, thereby providing efficient resource management.

Monitoring of total load at bundle level for taking decisions to activate and/or deactivate trail(s) allows to easily and timely trigger reactivation of trail(s) to provide additional capacity for the traffic on a route between a first end node and a second end node, without involving complex algorithm for allocating traffic to trails of various routes.

The total load for a bundle may be monitored over a monitoring period such that an average value of the is determined over the monitoring period.

An indicator of the total load (referred to herein as the total load indicator) for a bundle may be determined as a traffic rate (e.g., in Gb/s) or a percentage over the maximum capacity of the bundle in terms of traffic rate.

The monitored total load may take into account the traffic load over multiple communication layers (L0/L1/L2/L3, according to the OSI (Open System Interconnections) model), without distinction. This allows to simplify the monitoring based on a total load indicator at bundle level. The total load may thus correspond to a total traffic load or total traffic rate over all trails in the bundle.

A first threshold TH1 may be defined for the total load indicator, on the basis of which a decision to deactivate one or more trails may be taken. The decision may be taken for example when the total load indicator is below the first threshold TH1. When a decision to deactivate one or more trails is taken, the load of the trail(s) to be deactivated may be reallocated to one or more trails in the same bundle.

A second threshold TH2 may be defined for the total load indicator, on the basis of which a decision to activate one or more trails may be taken. The decision may be taken for example when the total load indicator is above the second threshold TH2. When a decision to activate one or more trails is taken when the load increases, one or more trails in the same bundle may be activated to transmit traffic, for example the traffic corresponding to the load increases that cannot be transmitted with the currently activated trails.

The first and second thresholds may be adjusted in various ways.

At least one of the first and second thresholds may be defined by a percentage with respect to the current maximum capacity of the bundle, where this current maximum capacity is the sum of the maximum capacity of the currently active trails in the bundle.

The first threshold is a deactivation threshold and may be determined on the basis of a maximum load (e.g., expressed in percentage) accepted after reallocation of traffic and deactivation of trail(s).

The second threshold is an activation threshold and may indicate that the bundle is close to saturation and there is a need to reactivate a trail in the bundle. The second threshold TH2 may be determined based on a remaining capacity or capacity margin (e.g., expressed in percentage) to be guaranteed for a bundle.

For example, for a bundle made of 2 active trails with a capacity per trail of 2x100Gb/s, the current maximum capacity of the bundle is 200 Gb/s.

The second threshold may be set to 80% (corresponding to 160 Gb/s), meaning a margin corresponding to a remaining capacity of at least 20% of the current maximum capacity (corresponding to a margin of 40 Gb/s) is guaranteed. This margin may be used for accepting additional traffic until the trail(s) to be reactivated are active and traffic has been allocated to the reactivated trail(s). This allows to accept additional traffic without interruption and to reactivate trails in a timely manner.

The first threshold may be set to 10% of the capacity of the bundle (corresponding to 20 Gb/s) such that when one of the trails is deactivated there will be only one trail loaded at 20% of its current maximum capacity. The first threshold may be set to 20%, such that when one of the trails is deactivated there will be a trail loaded at 40% of its current maximum capacity.

This allows for an optimization and load management at bundle level in a simple and efficient manner. This allows optimize the resources in term of trails with a minimum level of complexity.

The total load may be monitored periodically (e.g., every second, every 10 seconds, every minute, etc.) with a period that is short enough to be able to react in a timely fashion by reactivating at least one trail in case of sudden load increase. For example, when there is not enough available capacity on a bundle, one or more trails in the bundle may be reactivated immediately.

On the other hand, conditions to deactivate a trail or several trails may be checked less frequently (e.g., every 15 minutes, every hour, every 2 hours, etc.), since it is not critical from traffic transmission capacity point of view, but the highest the temporal frequency the highest the potential power consumption reduction.

A list of candidate trails that could be deactivated (or respectively activated) may be obtained. The candidate trails may be ordered in the list according to one or more characteristics of interest: a performance indicator of the considered trail, a power consumption of a piece of equipment operating the trail, a current traffic load via the considered trail, a wavelength of use of the trail, the network operator, etc.

A piece of equipment operating a trail may be a piece of equipment operating the trail at an end node of the trail or at an intermediate node of the trail. A piece of equipment operating a trail may include or be a line card at an end node including an optical source of the considered trail. A piece of equipment operating a trail may include or be an optical amplifier.

A performance indicator of the considered trail may be for example: a latency, a QoS, a SINR, a Q factor, a BER (Bit Error Rate), . As an example, in order to reduce the power consumption, the trail(s) that consumes the most energy may be deactivated first. Similarly, the trail(s) that consumes the less energy may be activated first if this trail provides sufficient additional capacity.

In the context of the present disclosure, it is assumed that the activation or deactivation of a trail corresponds respectively to the activation or deactivation of its optical source (or activation or deactivation of the line card including the optical source). Deactivation of the optical source may mean that the optical source (or the line card including the optical source) is switched off or put in standby mode. Since optical transmissions are usually bi-directional, for a trail having a first end and a second end, the two optical sources (or the two line cards) at each end may be both activated / deactivated.

FIG. 2 shows a flowchart of a method for managing activation and/or deactivation of trails according to examples.

The steps of the method may be implemented by an apparatus adapted to trigger activation and/or deactivation of one or more optical source(s) at one or more source nodes in an optical network. The apparatus may be part of a network controller.

While the steps are described in a sequential manner, the person skilled in the art will appreciate that some steps may be omitted, combined, performed in different order and / or in parallel.

In step 200, a current value of a total load indicator is obtained for a bundle of trails.

In step 210, it is determined whether a check point has occurred. A check point occurs in step 220 when a given period of time T1 has expired since the last execution of step 220. The period of time T1 defines the temporal frequency with which the check point of step 220 is performed.

If it is determined in step 210 that a check point has occurred, step 220 is executed after step 210. If it is determined in step 210 that no check point has occurred, step 240 is executed after step 210.

In step 220, it is checked based on the total load indicator whether one or more trails can be deactivated. If it is determined that one or more trails can be deactivated, step 230 is executed after step 220. If it is determined that no trail can be deactivated, step 240 is executed after step 220.

In step 230, one or more trails to be deactivated are selected and the deactivation of the selected trails is triggered.

The selection of the trails may be based on first trail specific information obtained for one or more of the activated trails. The first trail specific information for a given trail includes at least one of: a performance indicator of the considered trail, a power consumption of a piece of equipment operating the trail (e.g., a line card including an optical source of the considered trail), or a current traffic rate via the considered trail, a wavelength of use of the trail. A performance indicator of the considered trail may be for example: a latency, a QoS, a SINR, BER, Q factor etc..

In step 240, it is determined whether one or more trails should be activated. If it is determined that one or more trails should be activated, step 250 is executed after step 240. If it is determined that no trail needs to be activated, step 200 may be executed again after step 240.

In step 250, one or more trails to be activated are selected and the activation of the selected trails is triggered.

The trail(s) to be activated may be selected in various ways. For example, based on second trail specific information obtained for one or more of the deactivated trails.

The second trail specific information for a given trail may include at least one of: a maximum traffic rate available for the considered trail, a power consumption of a piece of equipment operating the trail (e.g., a line card including an optical source of the considered trail at an end node of the trail).

Step 200 may be repeated after step 250.

The period of time T2 between two successive executions of step 200 may be smaller (meaning higher temporal frequency or periodicity) than the period of time T1 between two successive executions of step 220.

Thanks to the method based on periodic monitoring, there is no risk of instability and no need to implement multiple thresholds for defining a hysteresis.

For trails reactivation, continuous monitoring may be performed to make sure that trails while be immediately reactivated when the traffic load between the first end node (e.g., source node) and the second end node (e.g., destination node) of the bundle is growing.

Based on experimental results it has been shown that when the bundle load drops by 80%, up to 67% of the trails may be deactivated by using the proposed method. This leads to significant energy savings.

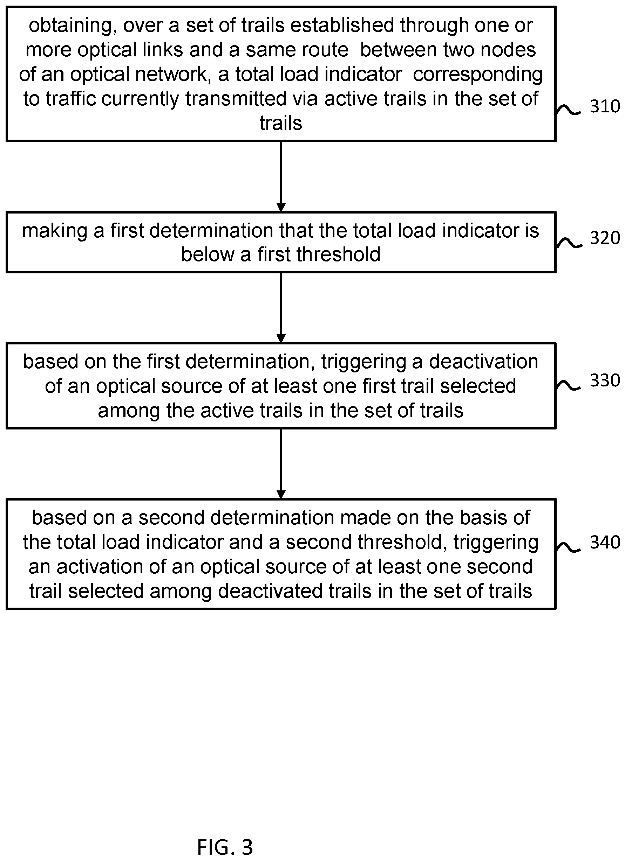

FIG. 3 shows a flowchart of a method for managing activation and/or deactivation of trails according to examples.

The steps of the method may be implemented by an apparatus adapted to trigger activation and/or deactivation of one or more optical source(s) at one or more source nodes in an optical network. The apparatus may be part of a network controller.

While the steps are described in a sequential manner, the person skilled in the art will appreciate that some steps may be omitted, combined, performed in different order and / or in parallel.

The method is applied for a given bundle corresponding to a set of trails between a first end node (e.g., a source node) and a second end node (e.g., destination node) of the optical network.

In step 310, a total load indicator corresponding to traffic currently transmitted via all the active trails in the set of trails is obtained for the set of trails.

In step 320, a first determination is made that the total load indicator is below a first threshold TH1.

The first determination may include checking whether the total load indicator is below the first threshold TH1. Checking whether the total load indicator is below the first threshold TH1 may be performed at a first temporal frequency. This may be performed as described by reference to FIG. 2 for step 220.

In step 330, based on the first determination, a deactivation of an optical source of at least one first trail selected among the active trails in the set of trails is triggered. The traffic currently allocated to the at least one first trail to be deactivated may be reallocated to other trails in the same bundle. This reallocation may be done before the deactivation.

The first trail to be deactivated may be selected in various ways. For example, the selection of the first trail to be deactivated may be based on first trail specific information obtained for one or more of the activated trails.

The selection of the first trail may be performed by applying a deactivation prioritization rule based on the first trail specific information. For example, a bundle can be made of 3 trails at 100Gb/s having the following characteristics: Trail1: used rate = 40Gb/s and Power consumed = 100W; Trail2: used rate = 10Gb/s and Power consumed = 100W, Trail3: used rate = 5Gb/s and Power consumed = 80W. The total used BW (55Gb/s) justifies deactivating 2 trails. If the operator wants to minimize the traffic interruption, he will prioritize trails having the highest used rate and then deactivate Trail3: here the deactivation prioritization rule is to deactivate first trail(s) having the lowest highest used rate. If the operator wants to minimize the power consumption, he will deactivate the trails operated by a piece of equipment (e.g., a line card including an optical source of the considered trail at an end node of the trail) having the highest power consumption, i.e. Trail2 (100W): here the deactivation prioritization rule is to deactivate first trail(s) associated with the highest the power consumption.

The first trail specific information for a given trail includes at least one of: a performance indicator of the considered trail, a power consumption of a piece of equipment operating the trail (e.g., line card at an end node and/or optical source) , or a current traffic rate via the considered trail, a wavelength of use of the trail. A performance indicator of the considered trail may be for example: a latency, a QoS, a SINR, OSNR, BER Q factor etc.

Step 340 is an optional step of the method.

In step 340, a second determination may be made on the basis of the total load indicator and a second threshold. Based on the second determination, it is detected that the traffic load for the bundle is above a threshold capacity of the activated trail(s) and in response to the detection, an activation of an optical source of at least one second trail selected among deactivated trails in the set of trails may be triggered.

The threshold capacity of the activated trails in the set of trails may correspond to the maximum capacity of all the activated trail(s) in the bundle or a percentage of the maximum capacity of all the activated trail(s) in the bundle.

The second determination may be that the total remaining capacity is below a second threshold. The total remaining capacity may be computed based on a difference between a maximum capacity of the bundle and the total load indicator. The second determination may include: checking whether the total remaining capacity is below a second threshold. Checking whether the total remaining capacity is below a second threshold may be performed at a second temporal frequency higher than the first temporal frequency. This may be performed as described by reference to FIG. 2 for step 200.

Alternatively, the second determination may be that the total load indicator is above a second threshold TH2. The second determination may include: checking whether the total load indicator is above the second threshold TH2. whether the total load indicator is above the second threshold TH2 may be performed at a second temporal frequency higher than the first temporal frequency. This may be performed as described by reference to FIG. 2 for step 200.

The total load indicator and/or the total remaining capacity may be expressed as a traffic rate (e.g., in Gb/s) or a percentage over the maximum capacity of the bundle in terms of traffic rate.

In step 340, based on the second determination, an activation of an optical source of at least one second trail selected among deactivated trails in the set of trails may be triggered.

The second trail to be activated may be selected in various ways. For example, the selection of the second trail to be activated may be based on second trail specific information obtained for one or more of the activated trails.

The selection of the second trail may be performed by applying an activation prioritization rule based on the second trail specific information.

The activation prioritization rule may be based on the same criterion as the deactivation prioritization rule or on a different criterion. In the above example of 3 trails, if the operator may want to minimize the traffic interruption, the activation prioritization rule may be to activate first the trail(s) having the highest used rate. If the operator wants to minimize the power consumption, the activation prioritization rule may be to activate first trail(s) operated by a piece of equipment (e.g., a line card including an optical source of the considered trail at an end node of the trail) having the lowest power consumption.

The second trail specific information for a given trail may include at least one of: a maximum traffic rate available for the considered trail, a power consumption of a piece of equipment operating the trail (e.g., a line card including an optical source of the considered trail at an end node of the trail), capacity or type of line card (the capacity of the line card or its type may depend on the bitrate to be carried by the trail and/or the number of trails to be generated by the considered line card), etc.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although steps of a method or process may be described in a sequential manner, some of the steps may be performed in parallel, concurrently or simultaneously. Also some steps may be omitted, combined or performed in different order.

One or more or all operation(s) of a method, process, function, engine, block, step described herein may be implemented in hardware, software, firmware, middleware, microcode, or any suitable combination thereof.

When implemented in software, firmware, middleware or microcode, instructions to perform the considered operation(s) may be stored in a computer readable medium that may be or not included in a computing device (or respectively a computing system) configured to execute the instructions. The instructions may be transmitted over the computer-readable medium and be loaded onto the computing device (or respectively computing system). The instructions are configured to cause the computing device (or respectively computing system) to perform the considered operation(s). For example, as mentioned above, at least one memory may include or store instructions, the at least one memory and the instructions may be configured to, with at least one processor, cause the computing device (or respectively computing system) to perform the considered operation(s).

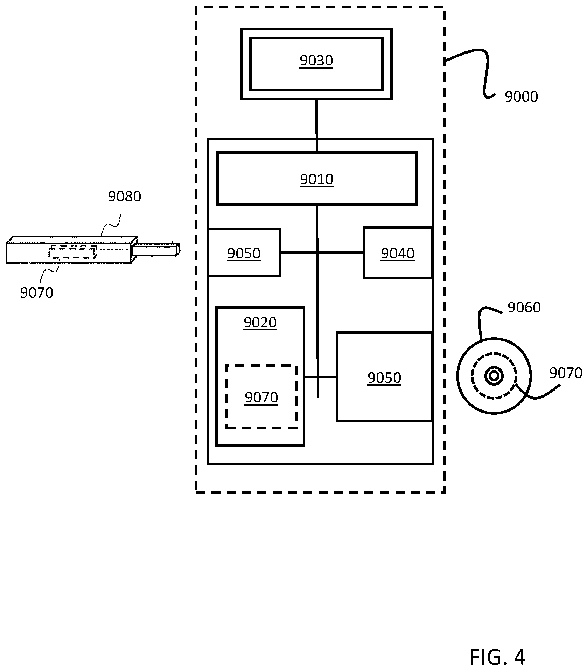

FIG. 4 illustrates an example embodiment of an apparatus 9000, as an example of computing device. The apparatus may be part of a network controller. The apparatus 9000 may be configured to perform one or more or all steps of any method disclosed herein.

As represented schematically, the apparatus 9000 may include at least one processor 9010 and at least one memory 9020. The apparatus 9000 may include one or more communication interfaces 9040 (e.g., network interfaces for access to a wired / wireless network, including Ethernet interface, WIFI interface, etc.) connected to the processor and configured to communicate via wired / non wired communication link(s). The apparatus 9000 may include user interfaces 9030 (e.g., keyboard, mouse, display screen, etc.) connected with the processor. The apparatus 9000 may further include one or more media drives 9050 for reading a computer-readable storage medium (e.g., digital storage disc 9060 (CD-ROM, DVD, Blue Ray, etc.), USB key 9080, etc.). The processor 9010 is connected to each of the other components 9020, 9030, 9040, 9050 in order to control operation thereof.

The memory 9020 may be or include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc.), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc.

The means may include at least one processor and at least one memory including at least one memory storing instructions that, when executed by the at least one processor, cause an apparatus to perform the considered function(s). The means may include circuitry (e.g., processing circuitry) configured to perform the considered function(s).

As used in this application, the term "circuitry" may refer to one or more or all of the following:
(a) hardware-only circuit implementations (such as implementations in only analog and/or digital circuitry) and
(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together; and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g., a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, when the term "and/or" is used in a list of items, it implies that the list may include any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed devices, systems and methods without departing from the scope of what is disclosed. Such embodiments should be understood to fall within the scope of the present disclosure as determined based upon the claims and any equivalents thereof.

### LIST OF MAIN ABBREVIATIONS

- OMS: Optical Multiplexing Section
- QoS: Quality of Service
- SINR: Signal Interference + Noise Ratio
- TE-Link: Traffic Engineering Link
- WDM: Wavelength Division Multiplexing

## Claims

1. A method comprising:
obtaining, for a set of trails established through one or more optical links between two same nodes of an optical network, a total load indicator corresponding to traffic currently transmitted via all the active trails in the set of trails;
making a first determination based on the total load indicator is below a first threshold;
based on the first determination, triggering a deactivation of an optical source of at least one first trail selected among the active trails in the set of trails.

2. The method of claim 1, comprising
making a second determination on the basis of the total load indicator and a second threshold;
based on the second determination, triggering an activation of an optical source of at least one second trail selected among deactivated trails in the set of trails.

3. The method of claim 2, wherein the second determination is that a total remaining capacity for traffic transmission over all the trails of the set of trails is below a second threshold, wherein the method comprises
checking whether the total load indicator is below the first threshold at a first temporal frequency; and
checking whether the total remaining capacity is below a second threshold at a second temporal frequency higher than the first temporal frequency.

4. The method of claim 2, wherein the second determination is that the total load indicator is above a second threshold, wherein the method comprises
checking whether the total load indicator is below the first threshold at a first temporal frequency;
checking whether the total load indicator is above the second threshold at a second temporal frequency higher than the first temporal frequency.

5. The method of any of claims 1 to 4, comprising
obtaining first trail specific information for one or more of the activated trails;
selecting the at least one first trail among the activated trails by applying a deactivation prioritization rule based on the first trail specific information,
wherein the first trail specific information for a given trail includes at least one of: a performance indicator of the considered trail, a power consumption of a piece of equipment operating the trail, or a current traffic rate via the considered trail.

6. The method of any of claims 2 to 5, comprising
obtaining second trail specific information for one or more of the deactivated trails;
selecting the at least one second trail among the deactivated trails by applying an activation prioritization rule based on the second trail specific information,
wherein the second trail specific information for a given trail includes at least one of: a maximum traffic rate available for the considered trail, or a power consumption of a piece of equipment operating the trail.

7. An apparatus comprising processing circuitry for:
obtaining, for a set of trails established through one or more optical links between two same nodes of an optical network, a total load indicator corresponding to traffic currently transmitted via active trails in the set of trails;
making a first determination that the total load indicator is below a first threshold;
based on the first determination, triggering a deactivation of an optical source of at least one first trail selected among the active trails in the set of trails.

8. The apparatus of claim 7,
wherein the processing circuitry is adapted for, based on a second determination on the basis of the total load indicator and a second threshold, triggering an activation of an optical source of at least one second trail selected among deactivated trails in the set of trails.

9. The apparatus of claim 8,
wherein the second determination is that a total remaining capacity for traffic transmission over all the trails of the set of trails is below a second threshold,
wherein the processing circuitry is adapted for
checking whether the total load indicator is below the first threshold at a first temporal frequency; and
checking whether the total remaining capacity is below a second threshold at a second temporal frequency higher than the first temporal frequency.

10. The apparatus of claim 8,
wherein the second determination is that the total load indicator is above a second threshold,
wherein the processing circuitry is adapted for:
checking whether the total load indicator is below the first threshold at a first temporal frequency;
checking whether the total load indicator is above the second threshold at a second temporal frequency higher than the first frequency time.

11. The apparatus of any of claims 7 to 10, wherein the processing circuitry is adapted for:
obtaining first trail specific information for one or more of the activated trails;
selecting the at least one first trail among the activated trails by applying a deactivation prioritization rule based on the first trail specific information,
wherein the first trail specific information for a given trail includes at least one of: a performance indicator of the considered trail, a power consumption of a piece of equipment operating the trail at an end node of the trail, or a current traffic rate via the considered trail.

12. The apparatus of any of claims 8 to 11, wherein the processing circuitry is adapted for
obtaining second trail specific information for one or more of the deactivated trails;
selecting the at least one second trail among the deactivated trails by applying an activation prioritization rule based on the second trail specific information,
wherein the second trail specific information for a given trail includes at least one of: a maximum traffic rate available for the considered trail, or a power consumption a piece of equipment operating the trail at an end node of the trail.

13. An apparatus of any of claims 7 to 12, wherein the processing circuitry comprise
- at least one processor;
- at least one memory storing instructions that, when executed by the at least one processor, cause the apparatus to perform the method.

14. A computer program comprising instructions for causing an apparatus to perform:
obtaining, for a set of trails established through one or more optical links between two same nodes of an optical network, a total load indicator corresponding to traffic currently transmitted via all the active trails in the set of trails;
making a first determination that the total load indicator is below a first threshold;
based on the first determination, triggering a deactivation of an optical source of at least one first trail selected among the active trails in the set of trails.

15. A non-transitory computer-readable medium comprising program instructions stored thereon for causing an apparatus to perform:
obtaining, for a set of trails established through one or more optical links between two same nodes of an optical network, a total load indicator corresponding to traffic currently transmitted via all the active trails in the set of trails;
making a first determination that the total load indicator is below a first threshold;
based on the first determination, triggering a deactivation of an optical source of at least one first trail selected among the active trails in the set of trails.
